# EUROPEAN PATENT APPLICATION

(11) **EP 3 373 373 A1**
(43) Date of publication of application: **12.09.2018**
(21) Application number: 18157129.0
(22) Date of filing: 16.02.2018
(51) Int. Cl.: H01M 8/242, H01M 8/2465, H01M 8/0202, H01M 8/04537, H01M 8/1018

(54) **CELL CONNECTOR UNIT**

(30) Priority: 22.02.2017 JP 2017030685
(71) Applicant: Toyota Jidosha Kabushiki Kaisha, Aichi-Ken 471-8571 (JP); Tyco Electronics Japan G.K., Takatsu-ku Kawasaki Kanagawa 213-8535 (JP)
(72) Inventor: IMANISHI, Masahiro, Toyota-shi, Aichi-ken, 471-8571 (JP); HOTTA, Daiji, Kawasaki, Kanagawa, 213-8535 (JP)
(74) Representative: Kuhnen & Wacker Patent- und Rechtsanwaltsbüro PartG mbB

(57) **Abstract**

A cell connector unit (1) according to an aspect of the invention is a cell connector unit configured to be connected with a cell laminate (5) of the fuel cell unit (4). The cell connector unit (1) has a plurality of cell connectors (10) that are connected with cells (6) of the cell laminate (5), and the plurality of cell connectors (10) are linked to each other so as to be in line in a lamination direction of the cells (6) in a state where the cell connector unit (1) is connected with the cell laminate (5). Among the cell connectors (10a, 10b) arranged on both ends in the lamination direction of the cells (6), a first cell connector (10a) is provided with a protrusion (11f) for recognizing the cell connector unit, and a second cell connector (10b) is not provided with the protrusion (11f), and all of the cell connectors (10) located between the cell connectors (10a, 10b) arranged on the both ends include or do not include the protrusion (11f).

## Description

### BACKGROUND OF THE INVENTION

### 1. Field of the Invention

The invention relates to a cell connector unit, and relates to, for example, a cell connector unit connected with a cell laminate of a fuel cell unit.

### 2. Description of Related Art

Cells of a fuel cell unit are connected to a voltage measuring device through cell connectors and voltage between given cells is measured so that a cell connector, which is, for example, malfunctioning, is discovered. In doing so, it is difficult to connect the cell connector to every cell because there are a several hundreds of cells in the fuel cell unit. Therefore, as disclosed in Japanese Patent Application Publication No. 2012-124166 (JP 2012-124166 A), a cell connector unit has been proposed, in which connection terminals to be connected with a plurality of cells, respectively, are provided in a single housing.

### SUMMARY OF THE INVENTION

When laminating cells of a fuel cell unit, there are instances where neighboring cells are misaligned to each other with respect to previously-set positions due to thickness errors and assembling errors of the cells. Therefore, for example, there is an idea that a cell connector unit is structured by linking each one of cell connectors that are connected with the cells, respectively, so as to tolerate mutual misalignment of the neighboring cells. However, it is difficult to discover a specific cell connector unit, which includes a cell connector that is malfunctioning or the like, from the plurality of cell connector units.

The invention realizes a cell connector unit that makes it possible to discover a specific cell connector unit easily from a plurality of the cell connector units.

A cell connector unit according to an aspect of the invention is a cell connector unit configured to be connected with a cell laminate of a fuel cell unit. The cell connector unit has a plurality of cell connectors connected with cells of the cell laminate, and the plurality of cell connectors are linked to each other so as to be in line in a lamination direction of the cells in a state where the cell connector unit is connected with the cell laminate. Among the cell connectors arranged on both ends in the lamination direction of the cells, a first cell connector is provided with a protrusion for recognizing the cell connector unit, a second cell connector is not provided with the protrusion, and all of the cell connectors located between the cell connectors arranged on the both ends include or do not include the protrusion. In such a structure, the cell connector with the protrusion and the cell connector without the protrusion are arranged adjacent to each other at a border of the plurality of cell connector units, thus making it possible to visually recognize the border of the plurality of cell connector units. Then, based on the recognized border of the plurality of cell connector units, it is possible to find a specific cell connector unit easily from the plurality of cell connector units.

In the foregoing cell connector unit, the protrusion may be a grip portion that is gripped by an operator when connecting the cell connector unit with the cell laminate. With this kind of structure, an operation to connect the cell connector unit to the cell laminate of the fuel cell unit is easily done.

In the foregoing cell connector unit, the protrusion may be provided in all of the cell connectors located between the cell connectors arranged on the both ends.

In the foregoing cell connector unit, the protrusion may not be provided in all of the cell connectors located between the cell connectors arranged on the both ends.

In the foregoing cell connector unit, the first cell connector may include an engaging male part and an engaging female part, the engaging male part of the first cell connector links the first cell connector to the neighboring first cell connector or the neighboring second cell connector, the engaging male part is inserted into the engaging female part of the first cell connector, the second cell connector is provided with an engaging female part, and the engaging male part of the first cell connector is inserted into the engaging female part of the second cell connector.

Acceding to the invention, it is possible to realize a cell connector unit, which makes it possible to discover a specific cell connector unit easily from a plurality of the cell connector units.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view schematically showing how voltage between cells in a fuel cell unit is measured by using a cell connector unit according to an embodiment;
FIG. 2 is a schematic perspective view of a state where the cell connector unit according to the embodiment is connected with a cell laminate in the fuel cell unit;
FIG. 3 is a schematic perspective view of how the cell connector unit according to the embodiment is connected with the cell laminate in the fuel cell unit;
FIG. 4 is a schematic perspective view of a structure of a housing of the cell connector unit according to the embodiment;
FIG. 5 is a schematic side view of the structure of the housing of the cell connector unit according to the embodiment;
FIG. 6 is a schematic front view of a state where the cell connector of the cell connector unit according to the embodiment is connected with the cell in the fuel cell unit;
FIG. 7 is a schematic perspective view of a connection terminal of the cell connector of the cell connector unit according to the embodiment;
FIG. 8 is a schematic plan view of a state where a connection terminal of a separator of the cell in the fuel cell unit is gripped by a grip portion of the connection terminal of the cell connector in the cell connector unit according to the embodiment; and
FIG. 9 is a schematic perspective view of a state where the cell connector unit according to the embodiment is connected with the cell laminate of the fuel cell unit in a wrong direction.

### DETAILED DESCRIPTION OF EMBODIMENTS

Hereinafter, a specific embodiment, to which the invention is applied, is explained in detail with reference to the drawings. However, the invention is not limited to the embodiment below. Also, the description and drawings below are simplified as appropriate in order to clarify the explanation.

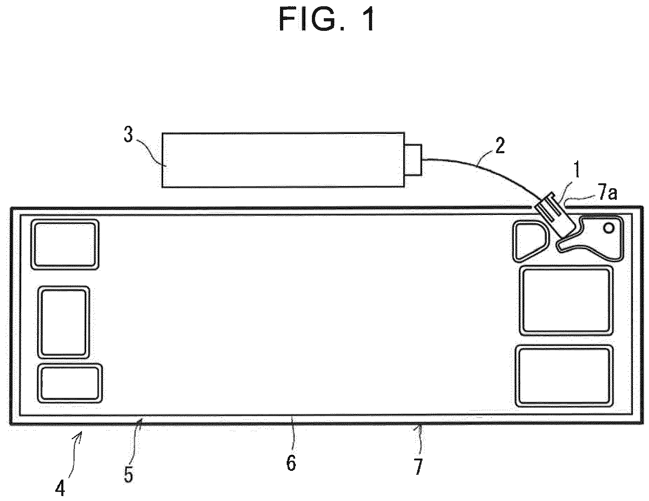

FIG. 1 is a view schematically showing how voltage between cells in a fuel cell unit is measured by using a cell connector unit according to the embodiment. As shown in FIG. 1, a cell connector unit 1 is connected with a voltage measuring device 3 through a connection cable 2, and is connected with a cell laminate 5 in order to measure voltage between cells 6 of the cell laminate 5 in a fuel cell unit 4.

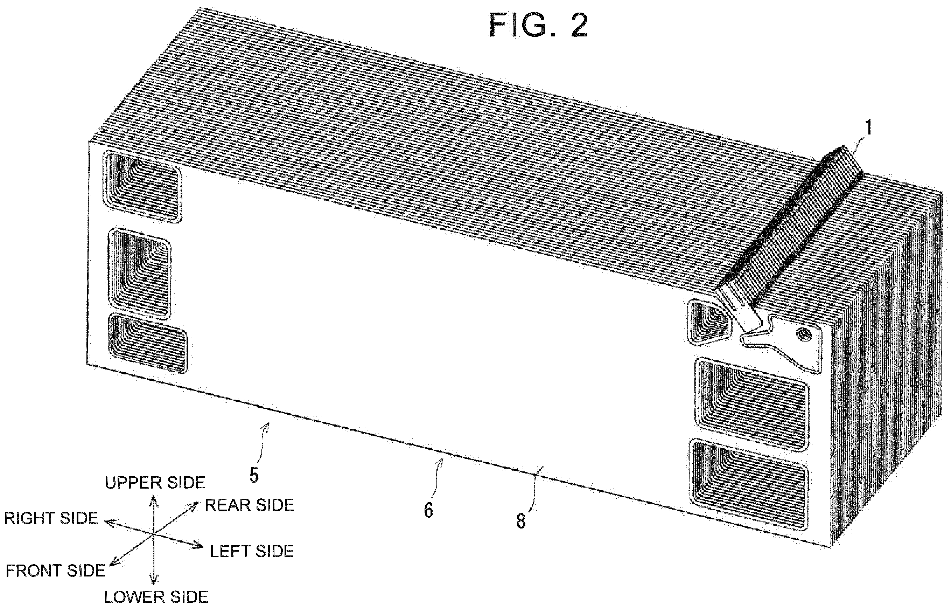

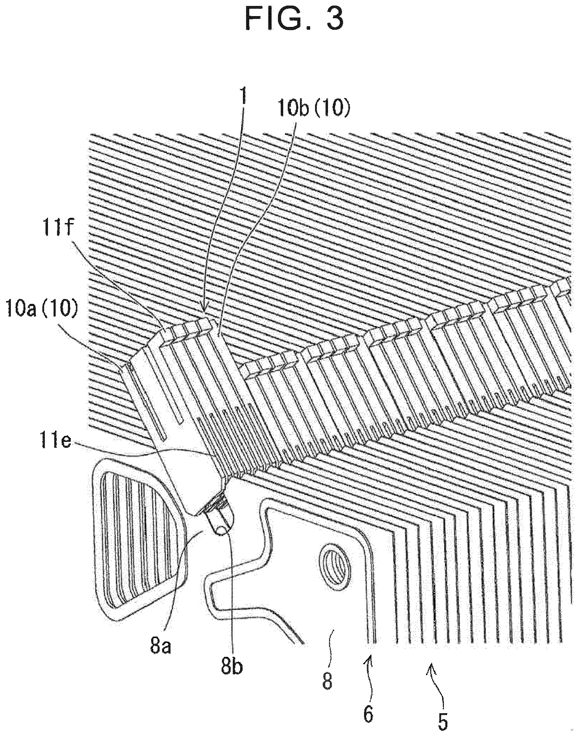

First of all, explanation is given regarding a structure of the fuel cell unit 4, with which the cell connector unit 1 according to this embodiment is connected. FIG. 2 is a schematic perspective view of a state where the cell connector unit according to the embodiment is connected with the cell laminate in the fuel cell unit. FIG. 3 is a schematic perspective view of how the cell connector unit according to the embodiment is connected with the cell laminate in the fuel cell unit. In order to clarify the explanation, a front-rear direction, a left-right direction, and an upper-lower direction of the fuel cell unit 4 are defined as shown in FIG. 2, but may be changed as appropriate depending on a form of use of the fuel cell unit 4.

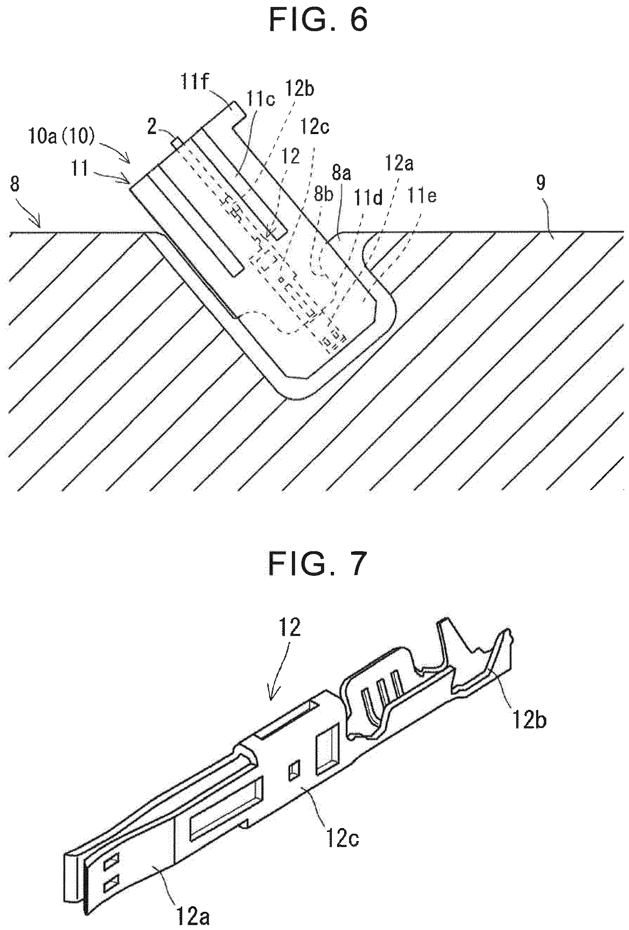

As shown in FIG. 1 and FIG. 2, the fuel cell unit 4 includes the cell laminate 5 in which the plurality of cells 6 are laminated in the front-rear direction of the fuel cell unit 4. Then, the cell laminate 5 is housed in a case 7. Although detailed illustration is not shown, each of the cells 6 is structured by sandwiching an electrolyte film, which is made of an ion-exchange membrane, between an anode and a cathode in the front-rear direction of the fuel cell unit 4, and further sandwiching the anode and the cathode, which sandwich the electrolyte film, between a pair of separators 8 in the front-rear direction of the fuel cell unit 4. Since the separator 8 is, for example, a conductive plate, an insulating film 9 (FIG. 6) is interposed between the separators 8 of the neighboring cells 6, thus preventing a short circuit between the neighboring cells 6. In FIG. 6, a region where the insulating film 9 is arranged is hatched.

As shown in FIG. 3, at least one of the pair of separators 8 includes a connection terminal 8a. A cell connector 10, which structures the cell connector unit 1, is electrically connected with the connection terminal 8a. The connection terminal 8a is, for example, a conductive part that is exposed from the insulating film 9 so as to surround a recessed portion 8b of the separator 8, with which the cell connector 10 of the cell connector unit 1 is mated. In this embodiment, in consideration of workability when inserting and removing the cell connector 10, the recessed portion 8b is formed in a left part of an upper surface of the separator 8, and is inclined towards the right side of the separator 8 as it goes to the upper side of the separator 8.

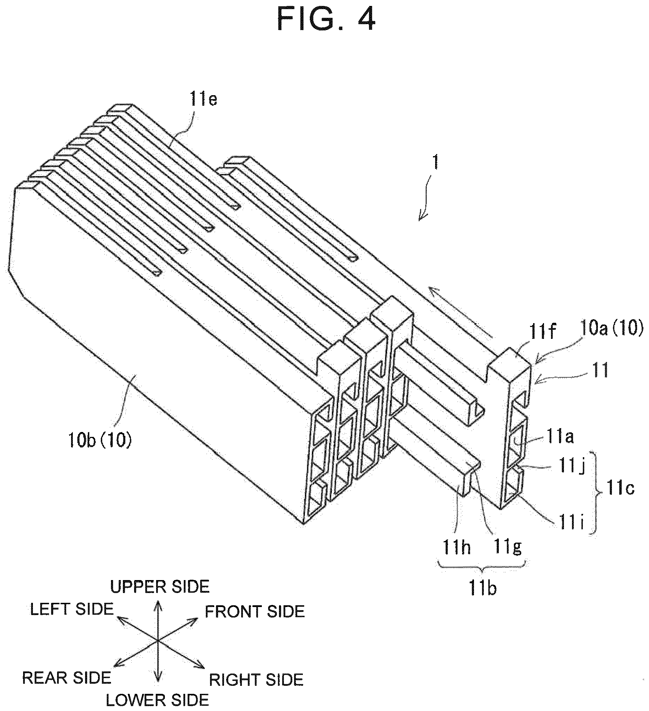

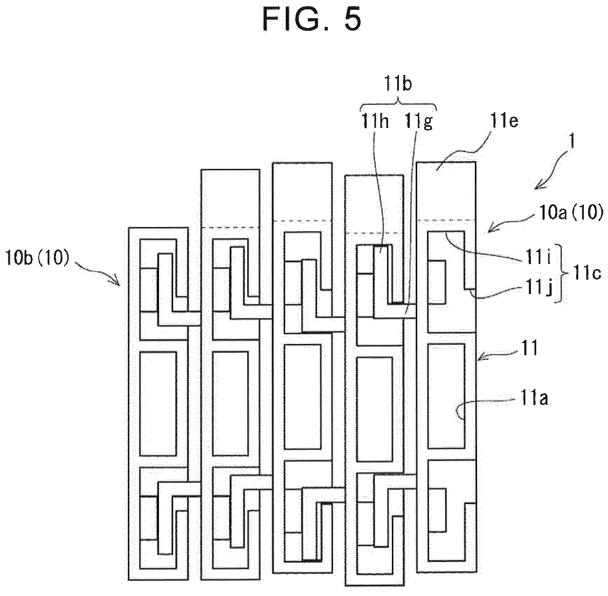

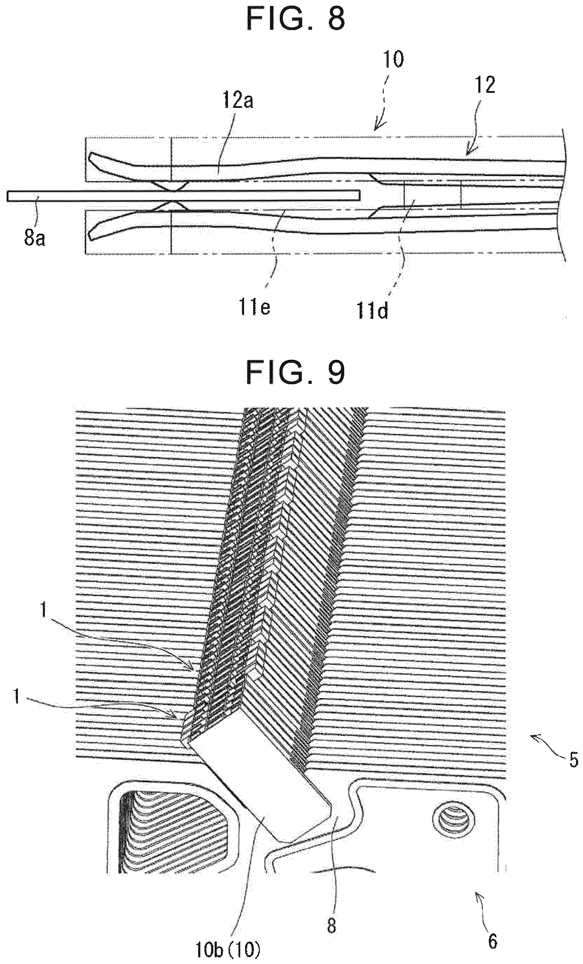

Next, a structure of the cell connector unit 1 according to this embodiment is explained. FIG. 4 is a schematic perspective view of a structure of a housing of the cell connector unit according to the embodiment. FIG. 5 is a schematic side view of the structure of the housing of the cell connector unit according to the embodiment. FIG. 6 is a schematic front view of a state where the cell connector of the cell connector unit according to the embodiment is connected with the cell in the fuel cell unit. FIG. 7 is a schematic perspective view of a connection terminal of the cell connector in the cell connector unit according to the embodiment. FIG. 8 is a schematic plan view of a state where the connection terminal of the separator of the cell in the fuel cell unit is gripped by a grip portion of the connection terminal of the cell connector in the cell connector unit according to the embodiment. In order to clarify the explanation, a front-rear direction, a left-right direction, and an upper-lower direction of the cell connector unit 1 are defined as shown in FIG. 4, but are changed as appropriate depending on a form of use of the cell connector unit 1.

As shown in FIG. 4 and FIG. 5, in the cell connector unit 1, first cell connectors 10a and a second cell connector 10b, which serve as the cell connectors 10, are combined and linked. Since the only difference between the first cell connector 10a and the second cell connector 10b is the shape of the housing, FIG. 4 and FIG. 5 show the housings of the first cell connectors 10a and the second cell connector 10b only.

As shown in FIG. 6, the first cell connector 10a includes a housing 11 and a connection terminal 12. As shown in FIG. 4 and FIG. 5, the housing 11 is made of an insulation member having a thin plate shape as a basic form, and formed by injection molding of thermoplastic resin such as polybutylene terephthalate and liquid crystal polymer. This kind of housing 11 includes a penetrating part 11a, engaging male parts 11b, engaging female parts 11c, a projecting part 11d, a slit part 11e, and a protrusion 11f. The penetrating part 11a penetrates the housing 11 in the left-right direction generally at the center of the housing 11 in the upper-lower direction.

The engaging male parts 11b are used when linking the first cell connector 10a to the neighboring first cell connector 10a or to the neighboring second cell connector 10b. The engaging male parts 11b project from, for example, a rear side surface of the housing 11 at an interval in the upper-lower direction of the housing 11. Then, each of the engaging male parts 11b includes a first portion 11g, which extends in the front-rear direction of the housing 11, and a second portion 11h, which extends in the upper-lower direction of the housing 11 from a rear end part of the first portion 11g.

In this embodiment, in the engaging male part 11b on the upper side, the second portion 11h extends upwardly from the rear end part of the first portion 11g, and, in the engaging male part 11b on the lower side, the second portion 11h extends downwardly from the rear end part of the first portion 11g. However, the second portion 11h only needs to extend in the upper-lower direction of the housing 11.

Each of the engaging female parts 11c includes an insertion portion 11i and a cut-out portion 11j, in which the engaging male part 11b is inserted. The second portions 11h of the engaging male parts 11b of the neighboring first cell connector 10a are inserted into the insertion portions 11i from the right side of the housing 11, respectively. The insertion portions 11i are arranged so as to, for example, sandwich the penetrating part 11a in the upper-lower direction of the housing 11. Then, each of the insertion portions 11i has a generally rectangular shape as a basic form in a view from the left-right direction of the housing 11, and extends from a right side surface of the housing 11 to the left side of the housing 11. However, the insertion portion 11i only needs to be space where the second portion 11h of the engaging male part 11b can be inserted.

The first portions 11g of the engaging male parts 11b of the neighboring first cell connector 10a are inserted in the cut-out portions 11j, respectively, from the right side of the housing 11. The cut-out portion 11j is formed in, for example, a front side surface of the housing 11, and extends from the right side surface of the housing 11 towards the left side of the housing 11. The cut-out portion 11j communicates with the insertion portion 11i.

As shown in FIG. 6, the projecting part 11d is formed on the left side of the housing 11, and mated with the recessed portion 8b of the separator 8 of the cell 6 in the fuel cell unit 4. Therefore, the projecting part 11d is formed into a shape corresponding to the recessed portion 8b of the separator 8.

The slit part 11e is formed so as to surround the projecting part 11d on the left side of the housing 11. In other words, the slit part 11e, which extends in the upper-lower direction of the housing 11, is formed generally at the center of the housing 11 in the front-rear direction so as to continue from an upper surface, a left side surface, through a lower surface of the housing 11. Thus, the projecting part 11d is formed on the left side of the housing 11. The connection terminal 8a of the separator 8 is inserted into the slit part 11e when the projecting part 11d of the housing 11 is mated with the recessed portion 8b of the separator 8 of the cell 6 in the fuel cell unit 4.

The protrusion 11f projects in the upper-lower direction of the housing 11 from at least one of the upper surface and the lower surface of the housing 11 in order to discriminate between the cell connector unit 1 and another cell connector unit 1. The protrusion 11f projects, for example, upwardly from a right end part of the upper surface of the housing 11. However, the protrusion 1 If only needs to be arranged at a position that does not hinder linkage of the cell connectors 10 and gives good visibility of the protrusion 11f when the cell connector unit 1 is connected with the cell laminate 5.

As shown in FIG. 7, the connection terminal 12 includes a grip portion 12a, a crimping portion 12b, and a connecting portion 12c. The grip portion 12a grips the connection terminal 8a of the separator 8 of the cell 6 in the fuel cell unit 4. The crimping portion 12b fixes one end portion of the connection cable 2 by crimping. The connecting portion 12c connects the grip portion 12a and the crimping portion 12b with each other. This kind of connection terminal 12 is fixed inside the penetrating part 11a of the housing 11. However, although the connection terminal 12 according to this embodiment fixes the connection cable 2 by crimping, fixing means is not limited.

In a view from the front-rear direction of the housing 11, the grip portion 12a of the connection terminal 12 projects from a left side surface of the projecting part 11d of the housing 11 and reaches the slit part 11e. Also, as shown in FIG. 8, the grip portion 12a sandwiches the connection terminal 8a of the separator 8, which is inserted into the slit part 11e of the housing 11, from the front-rear direction. The connection cable 2, which is fixed by the crimping portion 12b of the connection terminal 12 by crimping, projects from the right end part of the penetrating part 11a of the housing 11, and the other end part of the connection cable 2 is connected with the voltage measuring device 3. In FIG. 8, the housing 11 is shown by a two-dot chain line so as to clearly show a connecting status between the grip portion 12a of the connection terminal 12 and the connection terminal 8a of the separator 8 .

The second cell connector 10b has the same structure as that of the first cell connector 10a except that the engaging male parts 11b and the protrusion 11f of the housing 11 are not provided. Therefore, duplicated explanation is omitted, and, in the explanation below, the same reference numerals are used for the same components as those of the first cell connector 10a.

When structuring the cell connector unit 1 by combining the first cell connector 10a with the second cell connector 10b described above, for example, a plurality of (four in this embodiment, but the number is not limited) first cell connectors 10a are linked to each other as a group, and the second cell connector 10b is linked to the rearmost first cell connector 10a. This means that the second cell connector 10b is arranged on the most rear side of the cell connector unit 1.

As a result, the cell connector unit 1 has a structure in which the protrusion 11f is provided on the cell connector 10 on the most front side of the cell connector unit 1, the protrusion 11f is not provided on the cell connector 10 on the most rear side of the cell connector unit 1, and the protrusions 11f are provided on the cell connectors 10 located between the cell connectors 10 on both front and rear sides. However, the engaging male parts 11b may be provided on the housing 11 of the second cell connector 10b, and the second cell connector 10b may be linked to the first cell connector 10a on the most front side of the cell connector unit 1. Further, it is not necessary to provide the protrusion 11f on all of the cell connectors 10 located between the cell connectors 10 on both front and rear sides.

In this case, the plurality of first cell connectors 10a are linked to one another by repeating a process of inserting and engaging the engaging male parts 11b of the first cell connector 10a into and with the engaging female parts 11c from the right side of another first cell connector 10a arranged on the rear side of the first cell connector 10a. Then, as the engaging male parts 11b of the first cell connector 10a on the most rear side are inserted into and engaged with the engaging female parts 11c from the right side of the second cell connector 10b, the cell connector unit 1 is structured. However, in this embodiment, although the cell connectors 10 are linked to each other towards the rear side of the cell connector unit 1, the linking order of the cell connectors 10 is not limited.

Next, procedures to connect the cell connector unit 1 according to this embodiment to the cell laminate 5 of the fuel cell unit 4 is explained. As shown in FIG. 3, the connection terminal 8a of the separator 8 of the cell 6 in the fuel cell unit 4 is inserted into the slit part 11e of the cell connector 10 through an opening 7a of the case 7. Meanwhile, as the projecting part 11d of the cell connector 10 is mated with the recessed portion 8b of the separator 8 of the cell 6 in the fuel cell unit 4, the cell connector unit 1 is connected with the cell laminate 5 of the fuel cell unit 4 in a state where each of the cell connectors 10 of the cell connector unit 1 is linked to each other in a lamination direction of the cells 6 in the fuel cell unit 4. In this case, the grip portion 12a of the connection terminal 12 in the cell connector 10 grips the connection terminal 8a of the separator 8, and the cell 6 and the voltage measuring device 3 are electrically connected with each other through the cell connector 10 and the connection cable 2.

In this embodiment, since the recessed portion 8b of the separator 8 is formed in the upper surface of the separator 8, an operation to connect the cell connector unit 1 with the cell laminate 5 of the fuel cell unit 4 is easily done. At this time, using the protrusion 11f of the cell connector 10 as a grip portion for an operator to grip makes it easy to connect the cell connector unit 1 with the cell laminate 5 of the fuel cell unit 4. The cell connector 10 of the cell connector unit 1 may be connected with each of the cells 6 of the fuel cell unit 4, or may be connected with the cells 6 at intervals of several cells 6.

Here, since the voltage measuring device 3 is set to measure voltage between given cells 6, it is necessary that the cell connectors 10 are connected with the cells 6 in previously-set arrangement. Therefore, as shown in FIG. 2 and FIG. 3, if the protrusions 11f of the cell connector unit 1 project in the same direction when the cell connector unit 1 is connected with the cell laminate 5 of the fuel cell unit 4, it means that the cell connectors 10 are connected with the cells 6 in the previously-set arrangement.

FIG. 9 is a schematic perspective view of a state where the cell connector unit according to the embodiment is connected with the cell laminate in the fuel cell unit in a wrong direction. As shown in FIG. 9, if the cell connector unit 1 is connected with the cell laminate 5 so that the direction of the protrusions 11f is different from that of the protrusions 11f of the other cell connector units 1, it is possible to easily recognize that the cell connector unit 1 is connected with the cell laminate 5 in a wrong direction. As a result, it is possible to restrain the voltage measuring device 3 from measuring voltage between wrong cells 6 to damage the cells 6.

As described above, in a case where the cell connector unit 1 is connected with the cell laminate 5 so that the protrusions 11f of the cell connector unit 1 project in the same direction, the second cell connector 10b, in which the protrusion 11f is not provided, is arranged in the border between the plurality of cell connector units 1. This means that, in the border between the plurality of cell connector units 1, the first cell connector 10a with the protrusion 11f and the second cell connector 10b without the protrusion 11f are arranged adjacent to each other. Therefore, it is possible to visually recognize the border between the plurality of cell connector units 1 easily.

Because of this, for example, when the cell connector unit 1 malfunctions, if one can recognize a spot where the malfunctioning cell connector unit 1 is located from either front or rear side of the fuel cell unit 4, it is possible to visually find the malfunctioning cell connector unit 1 easily from the plurality of cell connector units 1 based on the recognized borders between the plurality of cell connector units 1.

Further, when pulling out the malfunctioning cell connector unit 1 from the cell laminate 5, it is possible pull out only the malfunctioning cell connector unit 1 from the cell laminate 5 easily because the engaging male parts 11b do not project from a side surface of the cell connector unit 1 and the malfunctioning cell connector unit 1 is not linked to the neighboring cell connector unit 1.

Here, in the cell laminate 5, the neighboring cells 6 are misaligned from each other. Therefore, as shown in FIG. 5, it is preferred that the cell connector unit 1 has a structure that tolerates mutual misalignment of the neighboring cells 6.

For example, a height of the cut-out portion 11j of the engaging female part 11c of the cell connector 10 in the upper-lower direction is larger than a thickness of the first portion 11g of the engaging male part 11b of the cell connector 10 in the upper-lower direction. This makes it possible for the first portion 11g to move inside the cut-out portion 11j in the upper-lower direction of the housing 11 when the first portion 11g of the engaging male part 11b is inserted into the cut-out portion 11j of the engaging female part 11c.

Further, the second portion 11h of the engaging male part 11b of the cell connector 10 is able to move inside the insertion portion 11i of the engaging female part 11c of the cell connector 10 not only in the left-right direction of the housing 11 but also in the upper-lower direction and the front-rear direction of the housing 11.

Thus, the cell connector unit 1 is able to tolerate mutual misalignment of the neighboring cells 6. It should be noted that it is only necessary for the cell connector unit 1 to have a structure where the cell connectors 10 are linked to each other in a form that allows mutual misalignment of the neighboring cells 6.

As described so far, in the cell connector unit 1 according to the embodiment, the first cell connector 10a with the protrusion 11f and the second cell connector 10b without the protrusion 11f are arranged adjacent to each other at a border of the plurality of cell connector units 1. Therefore, it is possible to visually recognize the border of the plurality of cell connector units 1 easily. Then, based on the recognized border of the plurality of cell connector units 1, it is possible to visually find a cell connector unit 1 arranged at a specific spot from either front or rear side of the fuel cell unit 4 easily from the plurality of cell connector units 1. At this time, since the cell connector 10 is mated with the cell 6 in an inclined state, visibility of the protrusion 11f is better compared to a case where the cell connector 10 is mated with the cell 6 without being inclined.

In this embodiment, the border of the plurality of cell connector units 1 is recognized by the second cell connector 10b where the protrusion 11f is not provided. However, the border of the plurality of cell connector units 1 may be recognized by using the cell connector 10 where the protrusion 11f is provided. In this case, the protrusion 11f of the first cell connector 10a is omitted, and the protrusion 11f is provided in the second cell connector 10b.

The invention is not limited to the foregoing embodiment, and may be changed as appropriate without departing from the gist of the invention.

## Claims

1. A cell connector unit (1) configured to be connected with a cell laminate (5) of a fuel cell unit (4), comprising:
a plurality of cell connectors (10) connected with cells (6) of the cell laminate (5) wherein,
the plurality of cell connectors (10) are linked to each other so as to be in line in a lamination direction of the cells (6) in a state where the cell connector unit (1) is connected with the cell laminate (5),
among the cell connectors (10a, 10b) arranged on both ends in the lamination direction of the cells (6), a first cell connector (10a) is provided with a protrusion (11f) for recognizing the cell connector unit, and a second cell connector (10b) is not provided with the protrusion (11f), and all of the cell connectors (10) located between the cell connectors (10a, 10b) arranged on the both ends include or do not include the protrusion (11f).

2. The cell connector unit (1) according to claim 1, wherein
the protrusion (11f) is a grip portion that is structured for an operator to grip when connecting the cell connector unit (1) with the cell laminate (5).

3. The cell connector unit (1) according to claim 1 or 2, wherein
the protrusion (11f) is provided in all of the cell connectors (10) located between the cell connectors (10a, 10b) arranged on the both ends.

4. The cell connector unit (1) according to claim 1 or 2, wherein
the protrusion (11f) is not provided in all of the cell connectors (10) located between the cell connectors (10a, 10b) arranged on the both ends.

5. The cell connector unit (1) according to any one of claims 1 to 4, wherein
the first cell connector (10a) includes an engaging male part (11b) and an engaging female part (11c),
the engaging male part (11b) of the first cell connector (10a) links the first cell connector (10a) to the neighboring first cell connector (10a) or the neighboring second cell connector (10b),
the engaging male part (11b) is inserted into the engaging female part (11c) of the first cell connector (10a),
the second cell connector (10b) is provided with an engaging female part, and
the engaging male part (11b) of the first cell connector (10a) is inserted into the engaging female part of the second cell connector (10b).
